# DEMANDE DE BREVET EUROPEEN

(11) **EP 3 130 397 A1**
(43) Date de publication de la demande: **15.02.2017**
(21) Numéro de dépôt: 15180784.9
(22) Date de dépôt: 12.08.2015
(51) Int. Cl.: B01J 19/02, B01J 19/06, B01J 19/24, F16L 58/00

(54) **TUBE DE RÉFORMAGE AVEC PIÈCE DE PROTECTION CONTRE LA CORROSION**

(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: RICHET, Nicolas, 78330 Fontenay-le-Fleury (FR); SCHOLZ, Hans Werner, D-61231 Bad Nauheim (DE)
(74) Mandataire: Beroud, Amandine

(57) **Abrégé**

Tube de reformage (1) comprenant:
- une cavité (2) débouchant de part et d'autre du tube,
- une paroi externe,
- une paroi interne (3),
- une pièce de protection (4) contre la corrosion insérée dans la cavité en miroir d'au moins une partie de la paroi interne,
- un espace compris entre la paroi interne et la pièce de protection, et
- un matériau réfractaire (5) comblant ledit espace compris entre la paroi interne et la pièce de protection.

## Description

La présente invention a pour objet un tube de reformage comprenant un moyen permettant d'éviter dans sa cavité le phénomène de corrosion appelé « metal dusting ». Par « metal dusting » on entend une désintégration catastrophique des métaux (Fe, Ni, Co) observée dans les atmosphères carburantes de procédés chimiques et pétrochimiques.

Cette corrosion rapide et locale peut conduire à des problèmes au sein du procédé de reformage notamment des problèmes de sécurité.

Aujourd'hui les mécanismes de cette corrosion ne sont pas bien compris et il semble que de nombreux paramètres ont une influence : la composition chimique de l'alliage, la taille des grains, les contraintes résiduelles, la finition de la surface, la pression du procédé, la composition de l'atmosphère...Et il est difficile d'évaluer la contribution intrinsèque de chaque paramètre et leurs interactions.

Depuis de nombreuses années, les chercheurs ont développé plusieurs barrières pour empêcher ce phénomène de corrosion appelé « metal dusting ».

Parmi les solutions développées la plus importante est l'aluminisation de l'alliage. Cela consiste à faire réagir la vapeur d'aluminium avec l'alliage pour former une couche extérieure riche en aluminium. Selon l'alliage, la composition chimique du revêtement peut varier. Par exemple si nous considérons un alliage à base de Cr-Ni, la couche extérieure contiendra Al, Ni et Cr.

Plus récemment, les chercheurs ont développé une nouvelle formulation de revêtement avec l'objectif d'empêcher la formation de carbone de l'atmosphère. On sait aujourd'hui que par exemple le nickel peut catalyser la formation de carbone à partir d'une atmosphère de cémentation et qu'il s'agit de la première étape du mécanisme du phénomène de « metal dusting ». En utilisant une couche extérieure qui ne catalyse pas la formation de carbone, on prévient ainsi la formation de carbone et donc le phénomène de corrosion appelé « metal dusting ». Des revêtements comprenant de l'étain ont été développés et semblent présenter une bonne performance.

Les tubes composites sont une autre solution pour réduire la corrosion. Cette solution est basée sur l'assemblage de deux matériaux ayant des propriétés dissemblables. Habituellement un matériau présentera une résistance élevée à la corrosion dans les conditions du procédé tandis que l'autre présentera des propriétés mécaniques élevées. Les deux matériaux, habituellement des alliages, sont soudées ensemble en utilisant différents procédés de fabrication. Cela conduit à deux couches de matériaux ayant différentes épaisseurs selon les spécifications du procédé. La principale difficulté est de produire des formes complexes et le problème de la dilation thermique entraînant des contraintes qui pourraient augmenter la vitesse de corrosion ou réduire la résistance mécanique.

Partant de là, la première limitation des solutions existantes vis-à-vis du phénomène de corrosion appelé « metal dusting » est la dimension des pièces à protéger. Par exemple, si l'on considère les tubes utilisés pour le reformage du méthane, ces tubes font environ 13 m de long et il est difficile de trouver des entreprises qui possèdent l'équipement adapté pour réaliser un revêtement homogène (épaisseur et composition chimique). En outre il est difficile de réaliser le revêtement sur les petites sections de tube, avant de les souder ensemble pour obtenir la longueur finale, en raison de la faible capacité de soudage des revêtements en aluminium sur les petites sections.

La configuration des pièces à protéger peut aussi réduire le choix en termes de techniques de revêtement et composition chimique du revêtement.

Un autre des problèmes rencontrés est la différence de comportement de dilatation entre l'alliage du tube de reformage et le revêtement qui pourrait conduire à des fissures.

Dès lors, il s'agit de trouver un tube de reformage présentant un nouveau moyen amélioré permettant d'éviter dans sa cavité le phénomène de corrosion appelé « metal dusting ».

Une solution de la présente invention est un tube de reformage 1 comprenant:
- une cavité 2 débouchant de part et d'autre du tube,
- une paroi externe,
- une paroi interne 3,
- une pièce de protection 4 contre la corrosion insérée dans la cavité en miroir d'au moins une partie de la paroi interne,
- un espace compris entre la paroi interne et la pièce de protection, et
- un matériau réfractaire 5 comblant ledit espace compris entre la paroi interne et la pièce de protection.

Selon le cas le tube de reformage selon la présente invention peut présenter une ou plusieurs des caractéristiques suivantes :
- le matériau réfractaire 5 épouse la forme de la paroi interne et la forme de la pièce de protection ;
- le matériau réfractaire 5 est choisi parmi : tissus de fibre céramiques, papier de fibres céramiques, les fibres céramiques réfractaires, et les fibres céramiques polycristallines.
- ledit tube comprend une jointure 6 entre l'extrémité supérieure de la pièce de protection et la paroi interne ;
- ledit tube comprend une jointure 7 entre l'extrémité inférieure de la pièce de protection et la paroi interne ;
- au moins une jointure 6 ou 7 est une soudure, une brasure ou une jointure réalisée avec du verre ou du verre céramique ;
- la pièce de protection 4 comprend un matériau inerte vis-à-vis de la corrosion par metal dusting
- le matériau de la pièce de protection est choisi parmi les alliages à base de nickel et de chrome ; on pourra citer à titre d'exemple les alliages commerciaux 601, 617, 690 et 693;
- le matériau de la pièce de protection 4 est en céramique ou présente un revêtement en céramique ; De préférence la pièce de protection 4 contre la corrosion comprend un matériau présentant une faible résistance à la corrosion et revêtement en un matériau présentant une très bonne résistance à la corrosion ou un revêtement en céramique ;
- la céramique peut-être choisie parmi Al2O3, MgAl2O4, ZrO2, Y2O3-ZrO2, MgO, MgO-ZrO2, Al2O3-ZrO2, SiC, et Si3N4.

Autrement dit la solution proposée consiste à insérer une pièce céramique ou métallique protégée. Le matériau constitutif de cette pièce de protection est sélectionné en fonction de sa résistance à la corrosion et de sa compatibilité chimique et physique avec l'alliage du tube. La pièce de protection ne colle pas à l'alliage du tube ce qui fait une grande différence avec les solutions de l'art antérieur. Le degré de liberté entre le tube et la pièce de protection permet de réduire les contraintes mécaniques qui pourraient être induites par la dilatation thermique des parties exposées à des températures élevées (400-1000°C).

Cependant, cet espace entre la paroi interne du tube et la pièce de protection pourrait conduire à un écoulement du gaz de synthèse. Aussi, il est nécessaire d'éviter l'accès du gaz de synthèse dans cet espace.

La présente invention propose comme solution principale au problème d'accès du gaz de synthèse dans ledit espace, l'utilisation d'un matériau réfractaire comblant ledit espace compris entre la paroi interne et la pièce de protection. De préférence le matériau réfractaire s'ajuste à la forme de la paroi interne du tube. Le matériau réfractaire doit être sélectionné en fonction de sa capacité à résister à une atmosphère de gaz de synthèse (H2, CO, CH4, H2O), à haute température (800 à 1000°C) et à se déformer lorsqu'il est soumis à une charge limitée afin de pouvoir s'ajuster à la forme de la paroi interne du tube et à la forme de la paroi de la pièce de protection. Cette déformation (compression) du matériau réfractaire sous son propre poids et avec l'impact du flux de syngas sur la partie conique de la pièce 4 va réduire le débit d'écoulement de gaz de synthèse dans l'espace entre la paroi interne du tube et la pièce de protection. Notons que les fibres céramiques réfractaires sont de bons candidats pour cette application.

A cette solution principale 2 solutions secondaires peuvent être ajoutées séparément ou en combinaison :
- utilisation d'une jointure entre l'extrémité supérieure de la pièce de protection et la paroi interne ; et/ou
- utilisation d'une jointure entre l'extrémité inférieure de la pièce de protection et la paroi interne.

Ces 2 solutions secondaires permettent dans le cas où la solution principale réduit fortement mais laisse passer le flux gazeux d'obtenir dans l'espace compris entre la paroi interne et la pièce de protection un gaz de synthèse statique ce qui réduit considérablement le taux de corrosion.

Notons que le tube de reformage selon l'invention sera de préférence utilisé pour la production d'hydrogène à partir de gaz de synthèse.

La solution proposée dans le cadre de l'invention permet de résoudre les problèmes suivants :
- protection contre la corrosion possible pour des grandes surfaces du tube de reformage. On entend par grande surface des pièces dont les dimensions rendent difficile ou impossible l'application d'un revêtement de protection;
- le choix des matériaux de la pièce de protection et la compatibilité avec l'alliage de base est beaucoup plus facile étant donné que la pièce de protection n'est pas en contact avec la paroi interne du tube de reformage ; et
- les risques de fissuration au niveau de la pièce de protection sont également diminuées car les pièces ne sont pas solidaires et peuvent se déplacer les unes par rapport aux autres librement. Ceci permet de réduire au maximum les contraintes à l'interface entre les pièces.

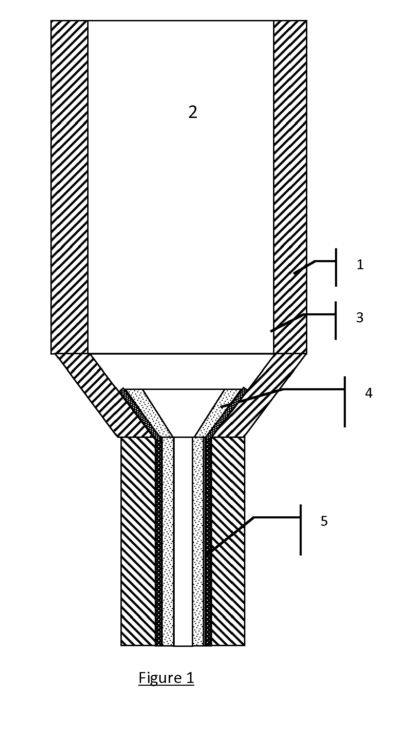

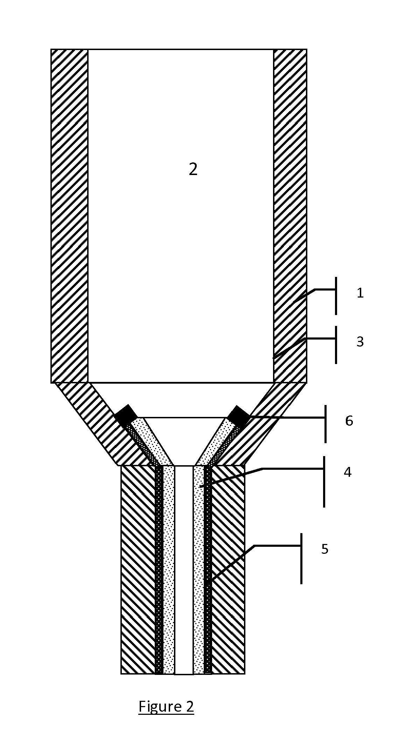

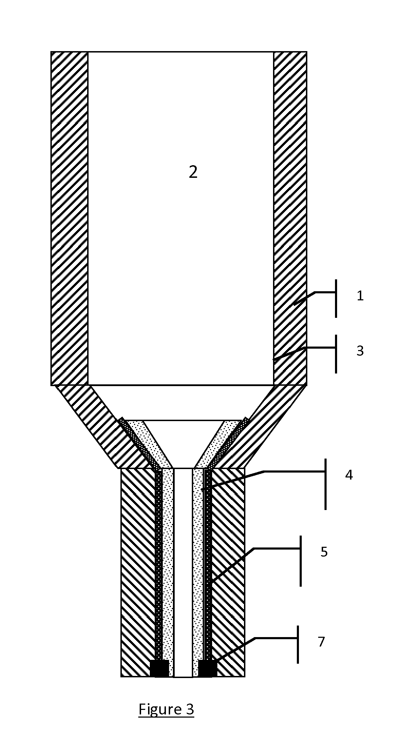

## Revendications

1. Tube de reformage (1) comprenant:
- une cavité (2) débouchant de part et d'autre du tube,
- une paroi externe,
- une paroi interne (3),
- une pièce de protection (4) contre la corrosion insérée dans la cavité en miroir d'au moins une partie de la paroi interne,
- un espace compris entre la paroi interne et la pièce de protection, et
- un matériau réfractaire (5) comblant ledit espace compris entre la paroi interne et la pièce de protection.

2. Tube de reformage selon la revendication 1, **caractérisé en ce que** le matériau réfractaire (5) épouse la forme de la paroi interne et la forme de la pièce de protection.

3. Tube de reformage selon l'une des revendications 1 ou 2, **caractérisé en ce que** le matériau réfractaire (5) est choisi parmi les tissus de fibre céramiques, papier de fibres céramiques, les fibres céramiques réfractaires, et les fibres céramiques polycristallines.

4. Tube de reformage selon l'une des revendications 1 à 3, **caractérisé en ce que** ledit tube comprend une jointure (6) entre l'extrémité supérieure de la pièce de protection et la paroi interne.

5. Tube de reformage selon l'une des revendications 1 à 4, **caractérisé en ce que** ledit tube comprend une jointure (7) entre l'extrémité inférieure de la pièce de protection et la paroi interne.

6. Tube de reformage selon l'une des revendications 5 ou 6, **caractérisé en ce qu'**au moins une jointure (6) ou (7) est une soudure, une brasure ou une jointure réalisée avec du verre ou du verre céramique.

7. Tube de reformage selon l'une des revendications 1 à 6, **caractérisé en ce que** la pièce de protection (4) contre la corrosion comprend un matériau inerte vis-à-vis de la corrosion par metal dusting.

8. Tube de reformage selon la revendication 7, **caractérisé en ce que** le matériau de la pièce de protection (4) est choisi parmi les alliages à base de nickel et de chrome.

9. Tube de reformage selon la revendication 7, **caractérisé en ce que** le matériau de la pièce de protection (4) est en céramique ou présente un revêtement en céramique.

10. Tube de reformage selon la revendication 9, **caractérisé en ce que** la céramique peut-être choisie parmi Al2O3, MgAl2O4, ZrO2, Y2O3-ZrO2, MgO, MgO-ZrO2, Al2O3-ZrO2, SiC, et Si3N4.

11. Utilisation d'un tube de reformage selon l'une des revendications 1 à 10 pour la production d'hydrogène à partir de gaz de synthèse.
